(19) Europäisches Patentamt
European Patent Office
Office européen des brevets

(11) **EP 2 145 368 B1**

(12) **EUROPÄISCHE PATENTSCHRIFT**

(45) Veröffentlichungstag und Bekanntmachung des Hinweises auf die Patenterteilung:
**23.03.2011   Patentblatt 2011/12**

(51) Int Cl.:
***H02H 7/16*** *(2006.01)*

(21) Anmeldenummer: **08736229.9**

(22) Anmeldetag: **15.04.2008**

(86) Internationale Anmeldenummer:
**PCT/EP2008/054537**

(87) Internationale Veröffentlichungsnummer:
**WO 2008/138699 (20.11.2008 Gazette 2008/47)**

(54) **SCHALTUNGSANORDNUNG MIT WENIGSTENS ZWEI IN SERIE GESCHALTETEN KONDENSATOREN**

CIRCUIT ARRANGEMENT COMPRISING AT LEAST TWO CAPACITORS THAT ARE CONNECTED IN SERIES

CIRCUIT COMPRENANT AU MOINS DEUX CONDENSATEURS BRANCHÉS EN SÉRIE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.05.2007   AT 7172007**

(43) Veröffentlichungstag der Anmeldung:
**20.01.2010   Patentblatt 2010/03**

(73) Patentinhaber: **Siemens Aktiengesellschaft 80333 München (DE)**

(72) Erfinder:
• **HALLAK, Jalal**
  **A-1220 Wien (AT)**
• **KERNSTOCK, Harald**
  **A-1070 Wien (AT)**

(74) Vertreter: **Maier, Daniel Oliver**
**Siemens AG**
**Postfach 22 16 34**
**80506 München (DE)**

(56) Entgegenhaltungen:
**JP-A- 6 302 474          US-A- 4 975 796**
**US-A1- 2005 280 968**

EP 2 145 368 B1

## Beschreibung

Die Erfindung betrifft eine Schaltungsanordnung mit wenigstens zwei Kondensatoren, welche in Reihe an eine Spannung angeschaltet sind, wobei parallel zu den wenigstens zwei Kondensatoren ein Spannungsteiler angeordnet ist, der die Spannung auf die wenigstens zwei Kondensatoren aufteilt und wobei parallel zu jedem Kondensator eine Schutzdiode in Reihe mit einem Serienwiderstand in der Weise angeordnet ist, dass die Schwellenspannung der Schutzdioden geringer als die zulässige Spannung des parallel- zur Schutzdiode angeordneten Kondensators ist.

Nach dem Stand der Technik werden Kondensatoren in Reihe geschaltet, wenn die anzulegende Spannung größer ist als die zulässige Spannung eines einzelnen Kondensators. Elektrolytkondensatoren (ELKO) sind beispielsweise in Baugrößen bis ca. 500V Nennspannung erhältlich. Demnach müssen bei Anwendungen, die eine Speicherung elektrischer Energie in ELKOs mit Spannungen über 500V vorsehen, zwei oder mehrere ELKOs in Reihe geschaltet werden.

Bekannt ist zum Beispiel die Verwendung mehrere Eingangskondensatoren für Wechselrichter, mittels derer elektrische Energie aus alternativen Stromquellen in ein Stromnetz eingespeist wird. Vor allem bei Solargeneratoren treten hohe Spannungen am Eingang des Wechselrichters auf, weshalb in der Regel eine Reihenschaltung mehrerer ELKOs zur eingangsseitigen Energiepufferung vorgesehen ist.

Um die anliegende Eingangsspannung gleichmäßig auf mehrere Kondensatoren aufzuteilen ist nach dem Stand der Technik ein Spannungsteiler parallel zu den Kondensatoren angeordnet. Im einfachsten Fall besteht der Spannungsteiler aus hochohmigen Widerständen, wobei jedem Kondensator ein Widerstand parallel geschaltet ist.

Derartige Reihenschaltungen mehrerer Kondensatoren haben den Nachteil, dass die gewünschte Spannungsbegrenzung für die einzelnen Kondensatoren wegfällt, wenn eine Störung auftritt, bei der ein Kondensator kurzgeschlossen wird. Der Kurzschluss eines Kondensators führt zwangsläufig dazu, dass sich die Eingangsspannung nur mehr auf die restlichen, nicht kurzgeschlossenen Kondensatoren aufteilt.

Dieses Problem wird bekannterweise durch eine überdimensionierung der Kondensatorenschaltung gelöst. So werden beispielsweise zusätzliche Kondensatoren angeordnet, um den Ausfall bzw. den Kurzschluss einzelner Kondensatoren zu kompensieren. Nachteilig sind dabei die erhöhten Bauteilkosten und die Notwendigkeit, eine zusätzliche Schaltung vorzusehen, die den Ausfall eines Kondensators anzeigt.

Eine andere bekannte Maßnahme zum Schutz der Kondensatoren ist die Anordnung von Schmelzsicherungen im Strompfad jedes einzelnen Kondensators. Im Falle: eines Kurzschlusses unterbricht die durchgeschmolzene Sicherung den Stromfluss und die restlichen Kondensatoren werden nicht weiter aufgeladen. Vor einer neuerlichen Inbetriebnahme muss neben der Beseitigung der Kurzschlussursache auch die Sicherung gewechselt werden.

Zudem ist aus der JP 06 302474 A eine Schaltung bekannt, bei der parallel zu jedem Kondensator eine Schutzdiode in Reihe mit einem Serienwiderstand angeordnet ist. Die Schwellenspannung der jeweiligen Schutzdiode ist dabei geringer als die zulässige Spannung des parallel angeordneten Kondensators.

Der Erfindung liegt die Aufgabe zugrunde, für eine Schaltungsanordnung der eingangs genannten Art eine Verbesserung gegenüber dem Stand der Technik anzugeben.

Erfindungsgemäß wird diese Aufgabe gelöst durch eine Schaltungsanordnung mit wenigstens zwei Kondensatoren, welche in Reihe an eine Spannung angeschaltet sind, wobei parallel zu den wenigstens zwei Kondensatoren ein Spannungsteiler angeordnet ist, der die Spannung auf die wenigstens zwei Kondensatoren aufteilt, wobei des Weiteren parallel zu jedem Kondensator eine Schutzdiode in Reihe mit einem Serienwiderstand in der Weise angeordnet ist, dass die Schwellenspannung der Schutzdiode geringer als die zulässige Spannung des parallel zur Schutzdiode angeordneten Kondensators ist und wobei parallel zu den Serienwiderständen eine Schutzschaltung angeordnet ist.

Diese Anordnung ist mit einfachen Bauteilen zu realisieren. Die eigens vorgesehene Schutzschaltung, die parallel zu den Serienwiderständen angeordnet ist, schützt die Kondensatoren, sobald eine Teilspannung an einem der Kondensatoren die Schwellspannung der dem Kondensator parallel geschalteten Schutzdiode übersteigt und somit am entsprechenden Serienwiderstand eine Spannung anliegt. Zu diesem Zweck umfasst die Schutzschaltung beispielsweise eine Einrichtung zur Freischaltung der Kondensatoren, welche im einfachsten Fall als Schaltelement am Eingang der Kondensatorschaltung ausgebildet ist. In einer anderen Ausprägung umfasst die Schutzschaltung einen Kondensator, der im Bedarfsfall in Reihe zu den restlichen Kondensatoren zugeschaltet wird.

Des Weiteren umfasst die Schutzschaltung wenigstens ein Koppelelement mit Sendeteil und Empfängerteil, welches die Serienwiderstände mit einer Alarmschaltung in der Weise koppelt, dass eine an einem der Serienwiderstände anliegende Spannung eine Aktivierung der Alarmschaltung auslöst. Die Alarmschaltung nutzt dann gegenüber der Kondensatorschaltung ein niedrigeres Spannungsniveau und ist in eine Steuerungsschaltung eines die Kopdensatorschaltung umfassenden Gerätes integrierbar. Eine galvanische Trennung zwischen Sende- und Empfängerteil des wenigstens einen Koppelelements erhöht zudem die Gerätesicherheit.

Eine einfache derartige Ausprägung sieht vor, dass die Alarmschaltung eine Einrichtung zur Freischaltung der wenigstens zwei Kondensatoren umfasst und dass die Einrichtung zur Freischaltung in Reihe mit dem Empfängerteil des wenigstens einen Koppelelements an eine Hilfsspannung angeschaltet ist. Im Falle eines Kurzschlusses eines Kondensators bewirkt die Koppelung des dann unter Spannung stehenden Serienwiderstands mit der Alarmschaltung, dass die Einrichtung zur Freischaltung mittels Empfängerteil des wenigstens einen Koppelelements mit der Hilfsspannung beaufschlagt wird. Die Hilfsspannung wird dabei beispielsweise als Steuerspannung eines Schaltelements zur Freischaltung genutzt.

Bei einer Anordnung mit mehreren Koppelelementen zwischen Kondensatorschaltung und Alarmschaltung sind die Empfängerteile der Koppelelemente parallel geschaltet, wobei diese Parallelschaltung in Reihe mit der Einrichtung zur Freischaltung an die Hilfsspannung angeschaltet ist. Dann führt eine Signalübertragung jedes Koppelelements dazu, dass die Alarmschaltung aktiviert wird.

Eine vorteilhafte Ausprägung der Erfindung sieht vor, dass wenigstens zwei Kondensatoren in Reihe an die Spannung angeschaltet sind, dass parallel zu jedem Kondensator ein Widerstand angeordnet ist und dass parallel zu jedem Widerstand eine Reihenschaltung aus einer Schutzdiode und einem Serienwiderstand geschaltet ist und dass des Weiteren parallel zu jedem Serienwiderstand ein Sendeteil eines Koppelelements angeordnet ist. Mit dieser Schaltung können beliebig viele Kondensatoren in Reihe geschaltet sein, ohne die Schutzwirkung der Schaltung zu beeinträchtigen.

Für zwei in Reihe geschaltete Kondensatoren ist ein Schaltung vorteilhaft, bei der parallel zum ersten Kondensator ein erster Widerstand in Reihe mit einem ersten Serienwiderstand und parallel zum zweiten Kondensator ein zweiter Widerstand in Reihe mit einem zweiten Serienwiderstand angeordnet sind und bei der parallel zum ersten Widerstand eine erste Schutzdiode und parallel zum zweiten Widerstand eine zweite Schutzdiode angeordnet sind und bei der des Weiteren parallel zu der aus den Serienwiderständen gebildeten Reihenschaltung der Sendeteil eines Koppelelements angeordnet ist. Es ist somit nur ein Koppelelement erforderlich, mittels dem beide Serienwiderstände mit der Alarmschaltung gekoppelt sind.

Günstig ist es, wenn parallel zu jedem Serienwiderstand eine Zenerdiode zum Schutz des Sendeteils des wenigstens einen Koppelelements angeordnet ist. Die Durchbruchspannungen der Zenerdioden liegen dabei unterhalb der zulässigen Spannung des wenigstens einen Koppelelements.

Des Weiteren ist es günstig, wenn dem Sendeteil des wenigsten einen Koppelelements ein Vorwiderstand vorgeschaltet ist. Mit diesem Vorwiderstand wird im Aktivierungsfall der Strom durch den Sendeteil des wenigstens einen Koppelelements begrenzt.

Vorteilhafterweise sind die Schutzdioden als Supressordioden ausgeführt. Diese weisen als Schwellenspannung eine definierte Durchbruchspannung sowie eine sehr hohe Ableitleistung und schnelles Ansprechverhalten auf.

Für die Koppelelemente ist eine Ausbildung als Optokoppler vorteilhaft. Optokoppler sind bewährte Bauelemente, die eine galvanische Trennung zwischen einem als Leuchtdiode ausgebildeten Sendeteil und einem als Fototransistor ausgebildetem Empfängerteil sicherstellen.

Die Erfindung wird nachfolgend in beispielhafter Weise unter Bezugnahme auf die beigefügten Figuren erläutert. Es zeigen in schematischer Darstellung:

Fig. 1      Schaltungsanordnung mit mehreren in Reihe angeordneten Kondensatoren

Fig. 2      Schaltungsanordnung mit zwei in Reihe angeordneten Kondensatoren und zwei Koppelelementen

Fig. 3      Schaltungsanordnung mit zwei in Reihe angeordneten Kondensatoren und einem Koppelelement

Fig. 4      Schaltungsanordnung gemäß Fig. 3 mit Stromfluss bei kurzgeschlossenem erstem Kondensator

Fig. 5      Schaltungsanordnung gemäß Fig. 3 mit Stromfluss bei kurzgeschlossenem zweitem Kondensator

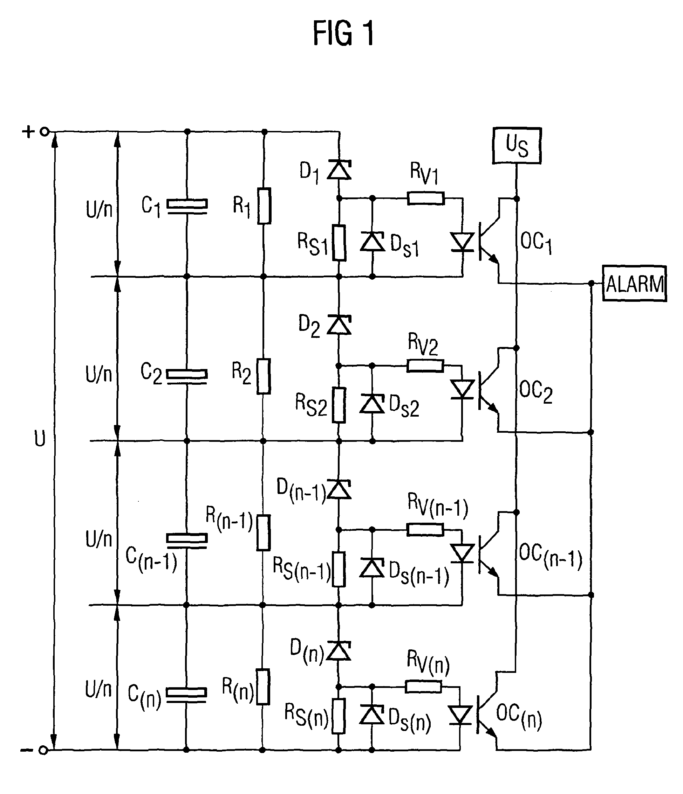

In Figur 1 ist die Ausprägung einer erfindungsgemäßen Schaltungsanordnung mit mehreren in Reihe angeordneten Kondensatoren $C_1 ... C_{(n)}$ dargestellt, wobei jedem Kondensator $C_i$ zur Vereinfachung der nachfolgenden Beschreibung ein Index i=1 bis n zugeordnet ist. Die Anzahl n der Kondensatoren $C_i ... C_{(n)}$ hängt dabei von der anliegenden Spannung U, den Nennspannungen der Kondensatoren $C_1...C_{(n)}$ und der Spannungsaufteilung auf die einzelnen Kondensatoren $C_1...C_{(n)}$ ab .

Die Spannungsaufteilung ist durch einen Spannungsteiler vorgegeben. Der Spannungsteiler wird im einfachsten Fall, wie in Figur 1 dargestellt, aus mehreren Widerständen $R_1 ... R_{(n)}$ gebildet, wobei jedem Kondensator $C_i$ ein Widerstand $R_i$ parallel geschaltet ist. Die Spannung U teilt sich entsprechend den Widerstandwerten auf die einzelnen Kondensatoren $C_i$ auf. Bei gleichen Widerstandswerten liegt an jedem Kondensator $C_i$ die gleiche Teilspannung U/n an.

Parallel zu jedem Widerstand $R_i$ ist eine Reihenschaltung aus einer Schutzdiode $D_i$ und einem Serienwiderstand $R_{si}$ geschaltet. Die jeweilige Schutzdiode $D_i$ weist dabei eine Schwellspannung auf, die unterhalb der zulässigen Spannung des parallel angeordneten Kondensators $C_i$ liegt. Dabei sind die Schutzdioden $D_i...D_n$ vorzugsweise als Supressordiode ausgebildet.

Im störungsfreien Betrieb gilt somit für die an den Kondensatoren $C_1...C_{(n)}$ anliegenden Teilspannungen:

$$UC_1 = UC_2 = UC_{(n-1)} = UC_{(n)} = U_{max}/n$$

Für die Spannungen an den Schutzdioden $D_1...D_{(n)}$ gilt:

$$UD_1 = UD_2 = UD_{(n-1)} = UD_{(n)} = UC_{(n)}$$

An den Serienwiderständen $R_{S1}...R_{S(n)}$ liegt im störungsfreien Betrieb keine Spannung an, da die an den Schutzdioden $D_1...D_{(n)}$ anliegenden Spannungen $UD_1... UD_{(n)}$ geringer als deren Schwellspannung ist. Parallel zu den Serienwiderständen $R_{S1} ... R_{S(n)}$ ist die Schutzschaltung angeordnet.

Die in Figur 1 dargestellte Schutzschaltung umfasst n Koppelelementen $OC_1...OC_n$, die vorzugsweise als Optokoppler ausgebildet sind. Jedem Serienwiderstand $R_{Si}$ ist dabei ein Sendeteil (z.B. Leuchtdiode) eines Koppelelementes $OC_i$ parallel geschaltet. Zum Schutz der Sendeteile vor Überspannungen ist zudem jedem Serienwiderstand $R_{Si}$ eine Zenerdiode $D_{S1}$ parallel geschaltet, die leitend wird, sobald die am Sendeteil anliegende Spannung einen zulässigen Maximalwert erreicht. Gegen Überströme sind die Sendeteile mittels Vorwiderstände $R_{v1}...R_{vn}$, geschützt.

Die Empfängerteile der Koppelelemente $OC_1...OC_n$ (z.B. Fototransistoren) sind parallel an eine Hilfsspannung $U_s$ und eine Einrichtung ALARM zur Freischaltung der Kondensatoren $C_1...C_n$ von der eingangs anliegenden Spannung U geschaltet.

Im Störungsfall, wenn ein Kondensator $C_i$ kurzgeschlossen ist, teilt sich die eingangs anliegende Spannung U auf die restlichen, nicht kurzgeschlossenen Kondensatoren $C_1...C_{(i-1)}, C_{(i+1)} ... C_{(n)}$ auf. Dabei wird die Schwellspannung der parallel zu diesen Kondensatoren $C_1 ... C_{(i-1)n}, C_{(i+1)} ... C_{(n)}$ angeordneten Schutzdioden $D_1...D_{(i-1)}, D_{(i+1)} ... D_{(n)}$ überschritten. Die Schutzdioden $D_1...D_{(i-1)}, D_{(i+1)} ... D_{(n)}$ werden leitend und an den Serienwiderständen $R_{S1} ... R_{S(i-1)}$, $R_{S(i+1)}...R_{S(n)}$ baut sich eine Spannung auf, die über die Koppelelemente $OC_1...OC_{(i-1)}, OC_{(i+1)} ... OC_{(n)}$ eine Aktivierung der Alarmschaltung zur Freischaltung der Kondensatoren $C_1...C_{(n)}$ bewirkt.

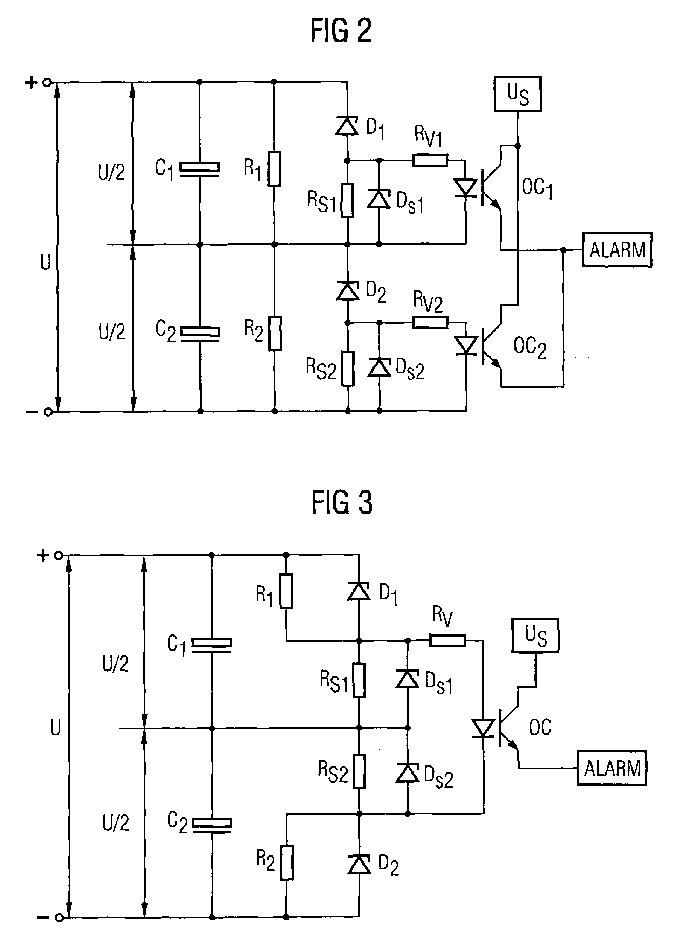

In Figur 2 ist eine Schaltungsanordnung gleicher Ausprägung mit nur zwei in Serie geschalteten Kondensatoren $C_1, C_2$ dargestellt. Im Störungsfall, d.h. bei Kurzschluss eines Kondensators $C_1$ bzw. $C_2$ liegt die gesamte eingangs anliegende Spannung U am nicht kurzgeschlossenen Kondensator $C_2$ bzw. $C_1$ an. Die Wirkungsweise der Schutzschaltung entspricht dabei der zu Figur 1 beschriebenen.

Sind nur zwei Kondensatoren $C_1, C_2$ in Serie geschaltet, ist auch eine andere erfindungsgemäße Ausprägung sinnvoll. Eine derartige alternative Schaltungsanordnung ist in Figur 3 dargestellt. Bei dieser Anordnung sind die Serienwiderstände $R_{S1}, R_{S2}$ Elemente des Spannungsteilers zur Aufteilung der eingangs anliegenden Spannung U auf die beiden Kondensatoren $C_1, C_2$. Der Spannungsteiler setzt sich dann aus einer ersten Reihenschaltung, bestehend aus erstem Widerstand $R_1$ und erstem Serienwiderstand $R_{S1}$, und einer zweiten Reihenschaltung, bestehend aus zweitem Widerstand $R_2$ und zweitem Serienwiderstand $R_{S2}$, zusammen. Die erste Reihenschaltung ist dem ersten Kondensator $C_1$ und die zweite Reheinschaltung ist dem zweiten Kondensator $C_2$ parallel geschaltet.

Dabei gilt für die Widerstände $R_1, R_2, R_{S1}, R_{S2}$:

$$(R_1+R_{S1}) = (R_2+R_{S2})$$

Die Spannung U teilt sich dann gleichmäßig auf die beiden Kondensatoren $C_1, C_2$ auf. Parallel zu jedem Serienwiderstand $R_{S1}, R_{S2}$ ist wieder je eine Zenerdiode $D_{S1}, D_{S2}$ zum Schutz vor Überspannungen in der Schutzschaltung angeordnet. Dabei bilden die beiden Zenerdioden $D_{S1}, D_{S2}$ eine Reihenschaltung, zu der ein Koppelelement OC mit einem Vorwiderstand $R_v$ parallel geschaltet ist.

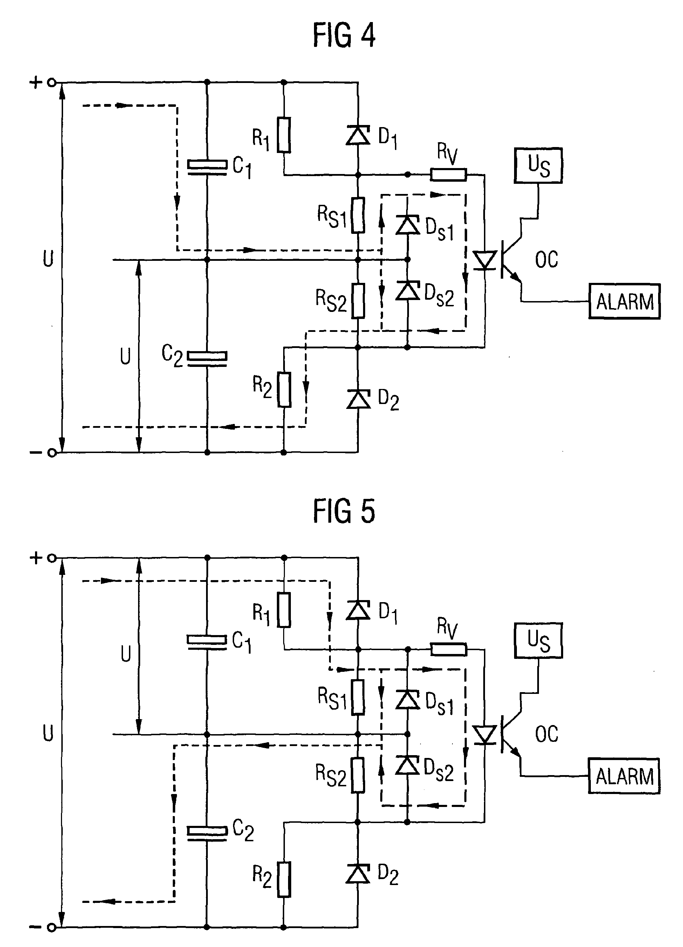

Die Stromflüsse bei Kurzschluss eines Kondensators $C_1, C_2$ sind in den Figuren 4 und 5 dargestellt. Der in Figur 4 dargestellte Kurzschluss des ersten Kondensators 1 bewirkt einen Stromfluss vom positiven Pol der Spannung U durch den ersten Kondensator $C_1$, wodurch am zweiten Kondensator $C_2$ die gesamte Spannung U anliegt. Die gesamte Spannung U liegt somit auch an der Reihenschaltung aus zweitem Widerstand $R_2$ und zweitem Serienwiderstand $R_{S2}$ an. Diese Reihenschaltung teilt die Spannung U auf die zweite Schutzdiode $D_2$ und die zweite Zenerdiode $D_{S2}$ bzw. die parallel dazu angeordneten Elemente der Schutzschaltung $D_{S1}, R_v, OC$ auf. Dabei wird die Schwellenspannung der

zweiten Schutzdiode $D_2$ überschritten, wodurch diese leitend wird. Der Strom fließt somit über die leitende zweite Schutzdiode $D_2$ zum negativen Pol der eingangs anliegenden Spannung U. Die am zweiten Serienwiderstand $R_{S2}$ anliegende Spannung bewirkt einen Stromfluss durch die Schutzschaltung, d.h. durch die erste Zenerdiode $D_{S1}$, den Vorwiderstand $R_v$ und den Sendeteil des Koppelelements OC. Dieser Stromfluss wird dabei durch die parallel zum zweiten Serienwiderstand $R_{S2}$ geschaltete zweite Zenerdiode $D_{S2}$ bestimmt.

Sobald ein Strom durch die Schutzschaltung fließt, wird über das Koppelelements OC die Alarmschaltung aktiviert und die Kondensatoren $C_1$, $C_2$ werden mittels der Einrichtung ALARM zur Freischaltung von der eingangs anliegenden Spannung U getrennt. Dies geschieht in der Weise, dass mittels Empfängerteil des Koppelelements OC die Einrichtung ALARM an die Hilfsspannung $U_s$ angeschaltet wird.

In Figur 5 ist der Stromfluss bei einem Kurzschluss des zweiten Kondensators $C_2$ dargestellt. In diesem Fall liegt am ersten Kondensator $C_1$ die gesamte Spannung U an, was zum Durchbruch der ersten Schutzdiode $D_1$ führt. Es fließt wieder ein Strom durch die Schutzschaltung und bewirkt die Freischaltung der Kondensatoren, wodurch deren Beschädigung verhindert wird.

Nach Behebung des Fehlers, die zu einem Kurzschluss eines Kondensators $C_1$ bzw. $C_2$ geführt hat, kann die Schaltung wieder in Betrieb genommen werden.

**Patentansprüche**

1. Schattungaanordnung mit wenigstens zwei Kondensatoren ($C_1$... $C_{(n)}$), welche in Reihe an eine Spannung (U) angeschaltet sind, wobei parallel zu den wenigstens zwei Kondensateren ($C_1$...$C_{(n)}$) ein Spannungsteiler angeordnet ist, der die Spannung (U) auf die wenigstens zwei Kondensatoren ($C_1$...$C_{(n)}$) aufteilt, wobei parallel zu jedem Kondensator ($C_1$) eine Schutzdiode ($D_1$) in Reihe mit einem Serienwiderstand ($R_{Si}$) in der Weise angeordnet ist, dass die Schwellenspannung der Schutzdiode ($D_1$) geringer als die zulässige Spannung des parallel zur Schutzdiode angeordneten Kondensators ($C_i$) ist, **dadurch gekennzeichnet, dass** parallel zu den Serienwiderständen ($R_{s1}$... $R_{s(n)}$) eine Schutzschaltung angeordnet ist und dass die Schutzschaltung wenigstens ein Koppelelement (OC bzw. $OC_1$... $OC_{(n)}$) mit Sendeteil und Empfängerteil umfasst, welches die Serienwiderstände ($R_{s1}$...$R_{s(n)}$) mit einer Alarmschaltung in der Weise koppelt, dass eine an einem der Serienwiderstände ($R_{Si}$) anliegende Spannung eine Aktivierung der Alarmschaltung auslöst.

2. Schaltungsanordnung nach Anspruch 1, **dadurch gekennzeichnet, dass** die Alarmschaltung eine Einrichtung (ALARM) zur Freischaltung der wenigstens zwei Kondensatoren ($C_1$...$C_{(n)}$) umfasst und dass die Einrichtung (ALARM) zur Freischaltung in Reihe mit dem Empfängerteil des wenigstens einen Koppelelements (OC bzw. $OC_1$... $OC_{(n)}$) an eine Hilfsspannung ($U_s$) angeschaltet ist.

3. Schaltungsanordnung nach Anspruch 2, **dadurch gekennzeichnet, dass** mehrere Koppelelemente (OC bzw. $OC_1$... $OC_{(n)}$) vorgesehen sind, deren Empfängerteile parallel geschaltet sind und dass diese Parallelschaltung in Reihe mit der Einrichtung (ALARM) zur Freischaltung an die Hilfsspannung ($U_s$) angeschaltet ist.

4. Schaltungsanordnung nach einen der Ansprüche 1 bis 3, **dadurch gekennzeichnet, dass** wenigstens zwei Kondensatoren ($C_1$...$C_{(n)}$) in Reihe an die Spannung (U) angeschaltet sind, dass parallel zu jedem Kondensator ($C_i$) ein Widerstand ($R_i$) angeordnet ist und dass parallel zu jedem Widerstand ($R_i$) eine Reihenschaltung aus einer Schutzdiode ($D_i$) und einem Serienwiderstand ($R_{si}$) geschaltet ist und dass des Weiteren parallel zu jedem Serienwiderstand ($R_{si}$) ein Sendeteil eines Koppelelements (OC bzw. $OC_1$... $OC_{(n)}$ angeordnet ist.

5. Schaltungsanordnung nach einem der Ansprüche 1 bis 3, **dadurch gekennzeichnet, dass** ein erster Kondensator ($C_1$) in Reihe mit einem zweiten Kondensator ($C_2$) an die Spannung (U) angeschaltet ist, dass parallel zum ersten Kondensator ($C_1$) ein erster Widerstand ($R_1$) in Reihe mit einem ersten Serienwiderstand ($R_{S1}$) und parallel zum zweiten Kondensator ($C_2$) ein zweiter Widerstand ($R_2$) in Reihe mit einem zweiten Serienwiderstand ($R_{S2}$) angeordnet sind und dass parallel zum ersten Widerstand ($R_1$) eine erste Schutzdiode ($D_1$) und parallel zum zweiten Widerstand ($R_2$) eine zweite Schutzdiode ($D_2$) angeordnet sind und dass des Weiteren parallel zu der aus den Serienwiderständen ($R_{S1}$, $R_{S2}$) gebildeten Reihenschaltung der Sendeteil eines Koppelelements (OC) angeordnet ist.

6. Schaltungsanordnung nach einem der Ansprüche 1 bis 5, **dadurch gekennzeichnet, dass** parallel zu jedem Serienwiderstand ($R_{si}$) eine Zenerdiode zum Schutz des Sendeteils des wenigstens einen Koppelelements (OC bzw. $OC_1$... $OC_{(n)}$) angeordnet ist.

**7.** Schaltungsanordnung nach einen der Ansprüche 1 bis 6, **dadurch gekennzeichnet, dass** dem Sendeteil des wenigsten einen Koppelelements (OC bzw. $OC_1... OC_{(n)}$) ein Vorwiderstand ($R_v$ bzw. $R_{v1}...R_{v(n)}$) vorgeschaltet ist.

**8.** Schaltungsanordnung nach einen der Ansprüche 1 bis 7, **dadurch** gekennzeichsnet, dass die Schutzdioden ($D_1...D_n$) als Supressordioden ausgebildet sind.

**9.** Schaltungsanordnung nach einen der Ansprüche 1 bis 8, **dadurch gekennzeichnet, dass** das wenigstens eine Koppelelement (OC bzw. $OC_1...OC_{(n)}$) als Optokoppler ausgebildet ist.

**Claims**

**1.** Circuit arrangement comprising at least two capacitors ($C_1...C_{(n)}$) which are connected in series to a voltage (U), wherein a voltage divider disposed in parallel with the at least two capacitors ($C_1...C_{(n)}$) divides the voltage (U) between the at least two capacitors ($C_1...C_{(n)}$) , wherein in parallel with each capacitor a protective diode ($D_1$) is disposed in series with a series resistor ($R_{Si}$) in such a way that the threshold voltage of the protective diode ($D_1$) is lower than the permissible voltage of the capacitor ($C_i$) disposed in parallel with the protective diode, **characterised in that** a protective circuit is disposed in parallel with the series resistors ($R_{S1}...R_{S(n)}$) and **in that** the protective circuit includes at least one coupling element (OC or $OC_1...OC_{(n)}$) which comprises a transmit part and a receiver part and which couples the series resistors ($R_{S1}...R_{S(n)}$) to an alarm circuit in such a way that a voltage present at one of the series resistors ($R_{si}$) triggers an activation of the alarm circuit.

**2.** Circuit arrangement according to claim 1, **characterised in that** the alarm circuit includes a device (ALARM) for isolating the at least two capacitors ($C_1...C_{(n)}$) and **in that** the isolating device (ALARM) is connected in series with the receiver part of the at least one coupling element (OC or $OC_1 ...OC_{(n)}$) to an auxiliary voltage ($U_S$).

**3.** Circuit arrangement according to claim 2, **characterised in that** a plurality of coupling elements (OC or $OC_1...OC_{(n)}$) are provided, the receiver parts of which are connected in parallel, and **in that** said parallel circuit is connected in series with the isolating device (ALARM) to the auxiliary voltage (Us).

**4.** Circuit arrangement according to one of claims 1 to 3, **characterised in that** at least two capacitors ($C_1...C_{(n)}$) are connected in series to the voltage (U), **in that** a resistor ($R_i$) is disposed in parallel with each capacitor ($C_i$), **in that** a series circuit consisting of a protective diode ($D_i$) and a series resistor ($R_{Si}$) is connected in parallel with each resistor ($R_i$), and **in that** in addition a transmit part of a coupling element (OC or $OC_1...OC_{(n)}$) is disposed in parallel with each series resistor ($R_{Si}$).

**5.** Circuit arrangement according to one of claims 1 to 3, **characterised in that** a first capacitor ($C_1$) is connected in series with a second capacitor ($C_2$) to the voltage (U), **in that** a first resistor ($R_1$) in series with a first series resistor ($R_{S1}$) is disposed in parallel with the first capacitor ($C_1$) and a second resistor ($R_2$) in series with a second series resistor ($R_{s2}$) is disposed in parallel with the second capacitor ($C_2$), **in that** a first protective diode ($D_1$) is disposed in parallel with the first resistor ($R_1$) and a second protective diode ($D_2$) is disposed in parallel with the second resistor ($R_2$), and **in that** in addition the transmit part of a coupling element (OC) is disposed in parallel with the series circuit formed from the series resistors ($R_{S1},R_{S2}$).

**6.** Circuit arrangement according to one of claims 1 to 5, **characterised in that** a Zener diode is disposed in parallel with each series resistor ($R_{Si}$) in order to protect the transmit part of the at least one coupling element (OC or $OC_1 ... OC_{(n)}$) .

**7.** Circuit arrangement according to one of claims 1 to 6, **characterised in that** a limiting resistor ($R_v$ or $R_{v1}... R_{v(n)}$) is connected upstream of the transmit part of the at least one coupling element (OC or $OC_1 ...OC_{(n)}$).

**8.** Circuit arrangement according to one of claims 1 to 7, **characterised in that** the protective diodes ($D_1...D_n$) are embodied as suppressor diodes.

**9.** Circuit arrangement according to one of claims 1 to 8, **characterised in that** the at least one coupling element (OC or $OC_1...OC_{(n)}$) is embodied as an optocoupler.

**Revendications**

1. Montage comprenant au moins deux condensateurs qui sont montés en série sur une tension (U), un diviseur de tension qui répartit la tension (U) sur les au moins deux condensateurs ($C_1...C_{(n)}$) montés en parallèle, aux au moins deux condensateurs ($C_1...C_{(n)}$) , dans lequel en parallèle à chaque condensateur ($C_1$) une diode ($D_i$) de protection est montée en série avec une résistance ($R_{Si}$) série de manière à ce que la tension de seuil de la diode ($D_i$) de protection soit plus basse que la tension admissible du condensateur ($C_i$) monté en parallèle à la diode de protection, **caractérisé en ce qu'**un circuit de protection est monté en parallèle aux résistances ($R_{S1}...R_{S(n)}$) série et **en ce que** le circuit de protection comprend au moins un élément (OC ou $OC_1...C_{(n)}$) ayant une partie d'émission et une partie de récepteur qui couple les résistances ($R_{S1}...R_{s(n)}$) série à un circuit d'alerte de manière à ce qu'une tension s'appliquant à l'une des résistances ($R_{S1}...R_{s(n)}$) série déclenche une activation du circuit d'alerte.

2. Montage suivant la revendication 1, **caractérisé en ce que** le circuit d'alerte comprend un dispositif (ALARM) de déconnexion des au moins deux condensateurs ($C_1...C_{(n)}$) et **en ce que** le dispositif (ALARM) de déconnexion est monté sur une tension ($U_s$) auxiliaire en série avec la partie récepteur du au moins un élément (OC ou $OC_1...C_{(n)}$) de couplage.

3. Montage suivant la revendication 2, **caractérisé en ce qu'**il est prévu plusieurs éléments (OC ou $OC_1...C_{(n)}$) de couplage, dont les parties récepteurs sont montées en parallèle et **en ce que** ce circuit en parallèle est monté sur la tension ($U_s$) auxiliaire en série avec le dispositif (ALARM) pour la déconnexion.

4. Montage suivant l'une des revendications 1 à 3, **caractérisé en ce qu'**au moins deux condensateurs ($C\theta_1...C\theta_{(n)}$) sont montés en série sur la tension (U), **en ce qu'**une résistance ($R_i$) est montée en parallèle à chaque condensateur ($C\theta_i$) et **en ce qu'**en parallèle à chaque résistance ($R_i$) est monté un circuit série composé d'une diode ($D_i$) de protection et d'une résistance ($R_{Si}$) série et **en ce qu'**en outre en parallèle à chaque résistance ($R_{Si}$) série est monté une partie émission d'un élément (OC ou $OC_1...C_{(n)}$) de couplage

5. Montage suivant l'une des revendications 1 à 3, **caractérisé en ce qu'**un premier condensateur ($C_1$) est monté sur la tension (U) en série avec un deuxième condensateur ($C_2$), **en ce qu'**en parallèle au premier condensateur ($C_1$) sont montés une première résistance ($R_1$) en série avec une première résistance ($R_{S1}$) série et en parallèle au deuxième condensateur ($C_2$) une deuxième résistance ($R_2$) en série avec une deuxième résistance ($R_{s2}$) série et **en ce qu'**en parallèle à la première résistance ($R_1$) sont montées une première diode ($D_1$) de protection et en parallèle à la deuxième résistance ($R_2$), une deuxième diode ($D_2$) de protection et **en ce qu'**en outre, la partie émission d'un élément (OC ou $OC_1...C_{(n)}$) de couplage est monté en parallèle au circuit série formé des résistances ($R_{S1}$, $R_{S2}$) séries.

6. Montage suivant l'une des revendications 1 à 5, **caractérisé en ce qu'**en parallèle à chaque résistance ($R_{Si}$) série est montée une diode zener de protection de la partie émission du au moins un élément (OC ou $OC_1...C_{(n)}$) de couplage.

7. Montage suivant l'une des revendications 1 à 6, **caractérisé en ce qu'**en amont de la partie émission du au moins un élément (OC ou $OC_1...C_{(n)}$) de couplage est montée une résistance ($R_v$ ou $R_{v1}...R_{v(n)}$) série.

8. Montage suivant l'une des revendications 1 à 7, **caractérisé en ce que** les diodes ($D_1...D_n$) de protection sont constituées sous la forme de diode de suppression.

9. Montage suivant l'une des revendications 1 à 8, **caractérisé en ce qu'**au moins un élément (OC ou $OC_1...C_{(n)}$) de couplage est constitué sous la forme d'un optocoupleur.

# FIG 1

## FIG 2

## FIG 3

# FIG 4

# FIG 5

**IN DER BESCHREIBUNG AUFGEFÜHRTE DOKUMENTE**

**In der Beschreibung aufgeführte Patentdokumente**

- JP 6302474 A